# EUROPEAN PATENT APPLICATION

(11) **EP 2 712 263 A1**
(43) Date of publication of application: **26.03.2014**
(21) Application number: 11865471.4
(22) Date of filing: 18.05.2011
(51) Int. Cl.: H04W 76/04

(54) **WIRELESS COMMUNICATION SYSTEM, USER TERMINAL, BASE STATION, AND COMMUNICATION METHOD**

(71) Applicant: Fujitsu Limited, Kawasaki-shi, Kanagawa 211-8588 (JP)
(72) Inventor: ABE, Masahiro, Kawasaki-shi Kanagawa 211-8588 (JP); SHIMAMOTO, Akira, Kawasaki-shi Kanagawa 211-8588 (JP); EZAKI, Takato, Kawasaki-shi Kanagawa 211-8588 (JP)
(74) Representative: Fenlon, Christine Lesley
(86) International application number: PCT/JP2011/061422
(87) International publication number: WO 2012/157091

(57) **Abstract**

A user terminal (100) receives discontinuous reception (DRX) information about DRX from a base station (200), sets DRX cycles based on the DRX information, sets a first period among the DRX cycles during which a downlink signal can be received, sets a receivable period within a second period outside of the first period among the DRX cycles, and receives the downlink signal during the receivable period.

## Description

### [Technical Field]

The disclosures herein generally relate to a wireless communication system.

### [Background Art]

With LTE (Long Term Evolution), there are cases where a discontinuous reception (DRX) function is set on a terminal in an RRC_CONNECTED state for reducing power consumption. A terminal having the DRX function set by a base station receives downlink wireless signals including a physical downlink control channel (PDCCH) and the like during On-duration periods, and does not receive wireless signals outside of On-duration periods. By setting the DRX function on a terminal, power consumption can be reduced.

When setting the DRX function of a terminal, a base station indicates a DRX command to the terminal by a MAC Control element. The DRX command includes parameters for DRX control. The parameters for DRX control include a "DRX Cycle", an "onDurationTimer", a "drxStartOffset" and the like.

A "DRX Cycle" indicates cyclic repetition of an Inactivity period following an On-Duration period. With a "DRX Cycle", a cycle for the DRX is set. An "onDurationTimer" indicates the number of continuous subframes of a PDCCH when a DRX Cycle is started. Namely, an "OnDurationTimer" represents periods during which a PDCCH can be received within a DRX cycle. A "drxStartOffset" indicates a subframe with which a DRX Cycle is started. The "drxStartOffset" may be set by units of 1 ms.

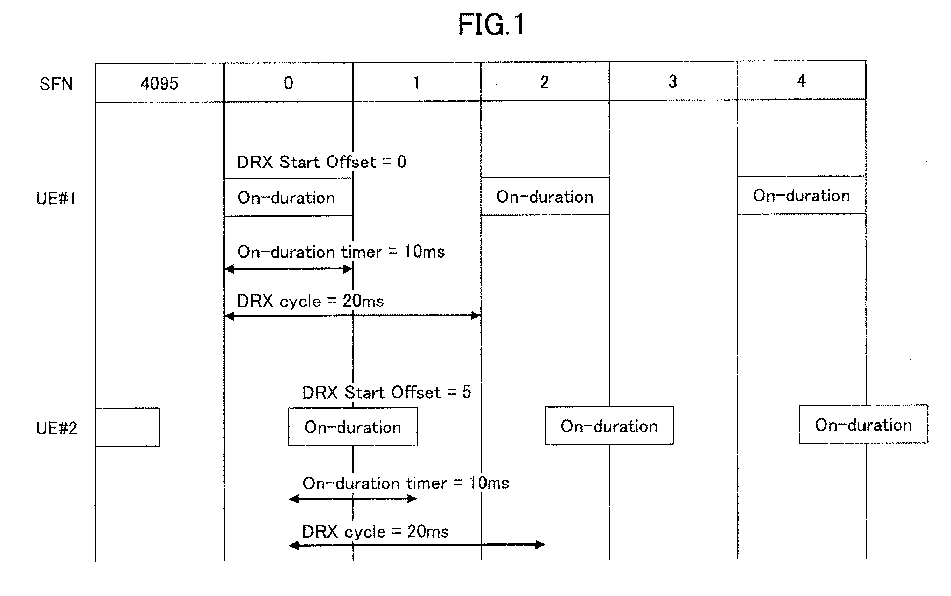

FIG. 1 illustrates an example of settings of the DRX function. In FIG. 1, the horizontal axis represents time by SFN (System Frame Number). SFN may take a value between 0 and 4095. SFN may be set by units of 10 ms.

In FIG. 1, the example is illustrated with a user terminal #1 (UE#1) and a user terminal #2 (UE#2) to be set with the DRX function. On the user terminal #1, the "DRX Cycle" is set to 20 ms, the "onDurationTimer" is set to 10 ms, and the "drxStartOffset" is set to 0. Consequently, the DRX cycles start at SFN=0 with a cycle of 20 ms. Within a DRX cycle, the first 10 ms is an On-duration period, and the latter 10 ms is an Inactivity period.

On the user terminal #2, the "DRX Cycle" is set to 20 ms, the "onDurationTimer" is set to 10 ms, and the "drxStartOffset" is set to 5. Consequently, the DRX cycles start at SFN=0.5 with a cycle of 20 ms. Within a DRX cycle, the first 10 ms is an On-duration period, and the latter 10 ms is an Inactivity period.

A terminal having the DRX function set transmits and receives user data during periods specified by the "OnDurationTimer", namely, during On-duration periods. The terminal does not transmit and receive user data during periods outside of On-duration periods, namely, during Inactivity periods. By not transmitting and receiving user data during Inactivity periods, power consumption can be reduced.

Operations of a terminal having the DRX function set are known (see, for example, Non-Patent Documents 1 and 2)

### [Related-Art Documents]

### [Non-Patent Documents]

[Non-Patent Document 1] 3GPP, TS36.321 V8.8.0 "5.7 Discontinuous Reception (DRX)", "6.1.3.3 DRX Command MAC Control Element"
[Non-Patent Document 2] 3GPP, TS36.331 V8.8.0 "6.3.2 Radio resource control information elements"

If downlink data is generated for a terminal having the DRX function set and a base station is out of sync with the terminal, the base station transmits an uplink sync request to the terminal during an On-duration period of the terminal. In response to receiving the uplink sync request, the terminal transmits a preamble with a random access channel (RACH). By transmitting the preamble to the base station from the terminal, a synchronization sequence starts.

After synchronization is established between the base station and the terminal, the base station restarts transmitting the downlink data to the terminal. Namely, if the downlink data is generated for a terminal having the DRX function set and the base station is out of sync with the terminal, a procedure for establishing synchronization starts at timing when the next coming On-duration period starts after generation of the downlink data. As the synchronization procedure starts at the timing when the next coming On-duration period starts after generation of the downlink data, a time tends to be long for establishing synchronization after generation of the downlink data. As the time tends to be long for establishing synchronization after generation of the downlink data, there are cases where a delay time becomes long between generation of the downlink data and its transmission to the terminal.

Also, there may be a case where the terminal cannot receive an uplink sync request from the base station during an On-duration period. If the terminal cannot receive an uplink sync request from the base station during an On-duration period, the terminal cannot receive a next uplink sync request until the next On-duration period.

### [Summary of the Invention]

### [Problem to be Solved by Invention]

Thereupon, it is an object of the disclosures to shorten a time for establishing synchronization between a base station and a terminal having discontinuous reception set.

### [Means to Solve the Problem]

According to at least one embodiment of the present invention, a wireless communication system includes a user terminal capable of discontinuous reception (DRX) and a base station communicating with the user terminal. The user terminal includes a receiving section for receiving information about DRX from the base station; a DRX cycle setting section for setting DRX cycles; a first period setting section for setting a first period among the DRX cycles to receive a downlink signal; and a receivable period setting section for setting a receivable period to receive the downlink signal within a second period outside of the first period. The base station includes a DRX cycle setting section for setting the DRX cycles; a first period setting section for setting the first period; a receivable period setting section for setting the receivable period; and a transmission section for transmitting the set information to the user terminal to be set on the user terminal.

### [Advantage of the Invention]

According to at least one embodiment of the present invention, it is possible for a base station to shorten a time for establishing synchronization with a terminal having discontinuous reception set.

### [Brief Description of Drawings]

FIG. 1 is a schematic view illustrating an example of discontinuous reception control;
FIG. 2 is a schematic view illustrating a wireless communication system according to an embodiment;
FIG. 3 is a schematic view illustrating a user terminal according to an embodiment;
FIG. 4 is a schematic view illustrating a control channel according to an embodiment;
FIG. 5 is a schematic view illustrating discontinuous reception control according to an embodiment;
FIG. 6 is a schematic view illustrating a base station according to an embodiment;
FIG. 7 is a schematic view illustrating operation of a wireless communication system according to an embodiment;
FIG. 8 is a flowchart illustrating operation of a user terminal according to an embodiment;
FIG. 9 is a flowchart illustrating operation of a base station according to an embodiment;
FIG. 10 is a schematic view illustrating a control channel according to an embodiment; and
FIG. 11 is a schematic view illustrating a control channel according to an embodiment.

### [Description of Reference Symbols]

- 100: user terminal
- 102: RF unit
- 104: BB unit
- 106: control unit
- 108: DRX control parameter setting unit
- 110: timer
- 200: base station
- 202: RF unit
- 204: BB unit
- 206: scheduler
- 208: DRX control parameter setting unit
- 210: control unit
- 250: cell

### [Mode for Carrying Out the Invention]

In the following, the embodiments of the present invention will be described with reference to the drawings. In the following, elements having the same functions are assigned with the same numerical codes throughout the drawings, and their description may not be repeated.

### < Wireless communication system >

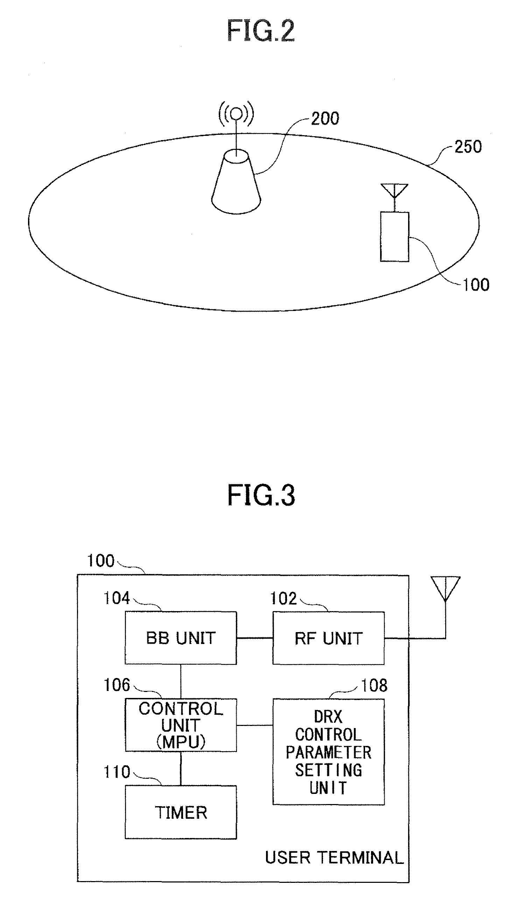

FIG. 2 is a schematic view illustrating a wireless communication system according to an embodiment.

The wireless communication system includes a base station (eNB: eNode B) 200 and a user terminal (UE: User Equipment) 100. In an upper layer of the base station 200, an MME (Mobility Management Entity)/S-GW (Serving-Gateway) (not illustrated) is installed. The MME/S-GW terminates NAS (Non-Access Stratum), manages the user terminal 100 in an idle state, and manages SAE (System Architecture Evolution) bearer resource.

The base station 200 can make the user terminal 100 transition into a discontinuous reception (DRX) state for power saving. The user terminal 100 can transition into a discontinuous reception state under the control of the base station 200.

Wireless communication systems in which the user terminal 100 may transition into a discontinuous reception state include wireless communication systems applicable with LTE (Long Term Evolution).

In the present embodiments, the wireless communication system applied with LTE will be described as an example. A wireless communication system applied with LTE is also called "Evolved UTRA and UTRAN". A wireless communication system other than those applied with LTE, but provided with the above feature, namely, the function with which the user terminal 100 can transition into a discontinuous reception state, can be applied with the disclosures. For example, the disclosures may be applied to WiMAX (Worldwide Interoperability for Microwave Access), or may be applied to a wireless LAN.

In the present wireless communication system, the base station 200 transmits user data using a shared channel. Alternatively, the base station 200 may transmit user data using a common channel. Also, the base station 200 may transmit user data using a shared channel and a common channel.

As for wireless access methods, the wireless communication system uses OFDMA (Orthogonal Frequency Division Multiple Access) for downlink and SC-FDMA (Single Carrier-Frequency Division Multiple Access) for uplink. OFDMA is a method of transmitting data on subcarriers that are obtained by dividing a frequency band. SC-FDMA is a transmission method that can reduce interference between terminals by dividing a frequency band and using different bands for different terminals.

### < User terminal >

FIG. 3 is a schematic view illustrating a user terminal 100 according to an embodiment.

The user terminal 100 includes an RF (Radio frequency) unit 102. The RF unit 102 converts a signal received by an antenna into a baseband signal to input the signal into a baseband (BB) unit 104. Signals received by the antenna include a DRX command and a PDCCH from the base station 200. There are cases where the PDCCH includes an uplink sync request. Also, the RF unit 102 upconverts an IF signal with an intermediate frequency input by the baseband unit 104 into an RF signal to amplify and transmit the signal.

The user terminal 100 includes the baseband unit 104. The baseband unit 104 is connected with the RF unit 102. The baseband unit 104 converts a digital signal input by the RF unit 102 into a voice signal. Also, the baseband unit 104 inputs the digital signal input by the RF unit 102 into the control unit 106. The digital signals include a DRX command, a PDCCH, and the like. Also, the baseband unit 104 converts the voice signal into the digital data to input the data into the RF unit 102. Under control of the control unit 106, the baseband unit 104 detects an uplink sync request using a first OFDM symbol for a PDCCH received during an Inactivity period. Namely, the base station 200 transmits a PDCCH with a first OFDM symbol during an Inactivity period.

### <PDCCH>

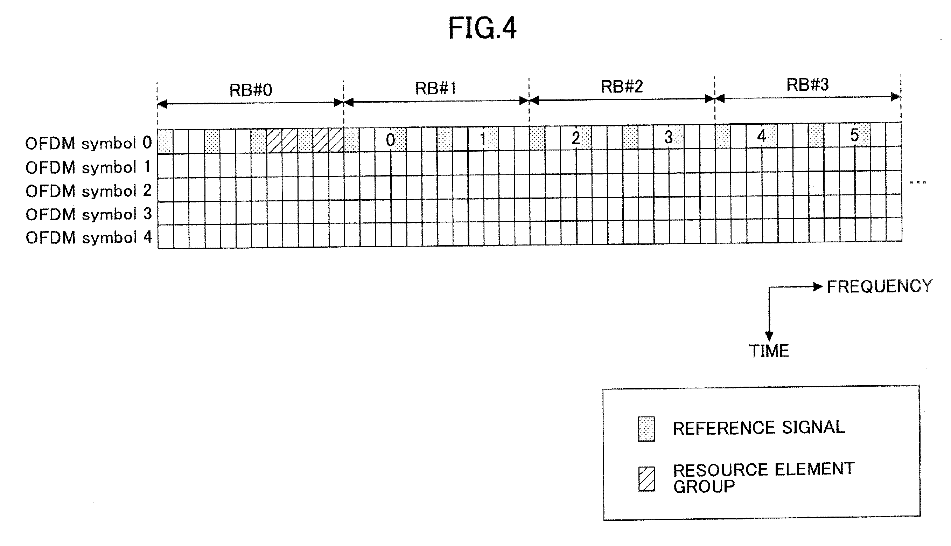

FIG. 4 is a schematic view illustrating a PDCCH to be transmitted from the base station 200 during an Inactivity period according to an embodiment. It may be transmitted during an On-duration period. In FIG. 4, the horizontal axis represents frequency, and the vertical axis represents time. In the example illustrated in FIG. 4, the number of symbols for the PDCCH is one. In other words, a CFI (Control channel Format Indicator) that should be indicated by a PCFICH (Physical Control Format Indicator Channel) is one. Control information is mapped onto the first OFDM symbol 0.

In the frequency direction, multiple subcarriers form a resource block (RB). In the example illustrated in FIG. 4, one RB includes 12 subcarriers. Also in the frequency direction, a reference signal is mapped onto predetermined subcarriers. In the example illustrated in FIG. 4, reference signals are mapped onto every three subcarriers in the first OFDM symbol.

Also, a resource element group (REG) is formed with four adjacent subcarriers as a unit. In the example illustrated in FIG. 4, REGs are specified with four adjacent subcarriers among resource elements except for the resource element onto which the reference signal mapped. Hatched boxes in FIG. 4 designate one of the REGs. Also, the digits in FIG. 4 represent the other REGs. Moreover, nine REGs constitute a control channel element (CCE). A PDCCH is allocated by units of CCEs. The digits illustrated in FIG. 4 may correspond to CCE indices.

Also, among CCEs of the first OFDM symbol (OFDM Symbol 0) of a PDCCH transmitted during an Inactivity period, an uplink sync request is mapped onto a CCE specified with a CCE index. In the example illustrated in FIG. 4, an uplink sync request may be mapped onto one of the CCE indices represented by "0"-"5".

The baseband section 104 does not decode a PCFICH for a PDCCH received during an Inactivity period. This is because it is obvious that the PCFICH is one. By not decoding such a PCFICH, processing load of the user terminal 100 can be reduced, and a time can be shortened for detecting an uplink sync request after receiving a PDCCH.

The baseband section 104 inputs a DRX command into the control unit 106. Also, the baseband section 104 inputs an uplink sync request detected from a PDCCH into the control unit 106.

The user terminal 100 includes the control unit 106. The control unit 106 is connected with the baseband unit 104. The control unit 106 may be configured with a microprocessor (MPU). Also, the control unit 106 may be configured with a central processing unit (CPU), or may be configured with a DSP (Digital Signal Processor). The control unit 106 sets a DRX command into a DRX control parameter setting unit 108 that should be input by the baseband unit 104. A DRX command includes an "onDurationTimer", a "DRX cycle", a "drxStartOffset", a "PDCCH reception mode outside of On-duration periods", a "discontinuous reception interval timer outside of On-duration periods", and a "CCE index".

Also, the control unit 106 executes discontinuous reception control based on parameters set into the DRX control parameter setting unit 108. When executing discontinuous reception control, if the "PDCCH reception mode outside of On-duration periods" is set on, control for discontinuous reception is also executed during an Inactivity period.

### < DRX control >

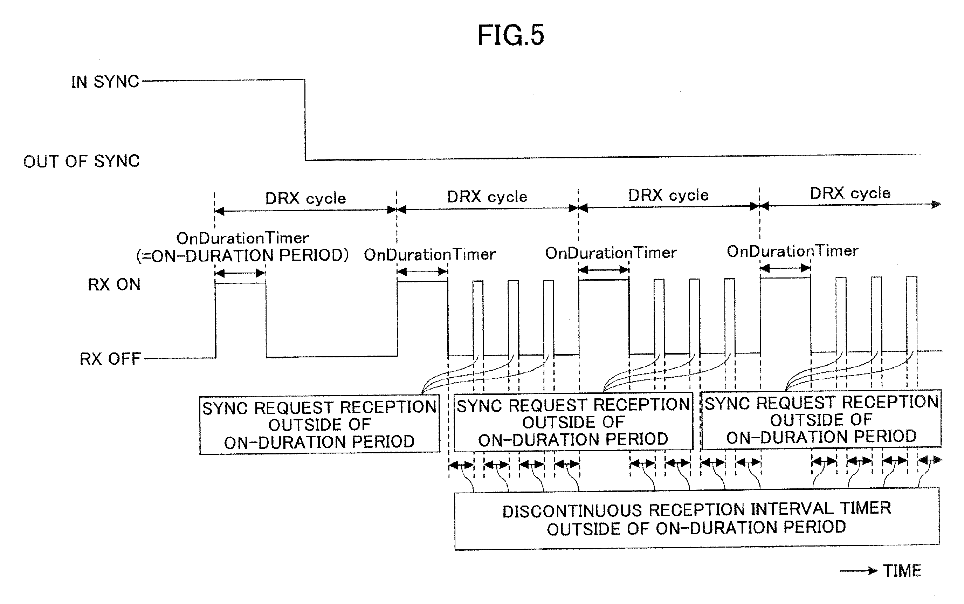

FIG. 5 is a schematic view illustrating an example of discontinuous reception control.

In FIG. 5, the horizontal axis represents time. As described above, a "DRX Cycle" indicates cyclic repetition of an Inactivity period following an On Duration period. With a "DRX Cycle", a cycle for DRX is set. An "onDurationTimer" indicates the number of continuous subframes of a PDCCH when a DRX Cycle is started. Namely, an "OnDurationTimer" represents periods during which a PDCCH can be received within a DRX cycle. A "drxStartOffset" indicates a subframe with which a DRX Cycle is started. The "drxStartOffset" may be set by units of 1 ms. The control unit 106 refers to the timer 110 and controls the "drxStartOffset".

Moreover, a "PDCCH reception mode outside of On-duration periods" indicates information for setting whether to execute discontinuous reception during an Inactivity period. For example, it may be represented with on or off. For example, a flag may be provided to indicate whether to execute discontinuous reception during an Inactivity period. A "discontinuous reception interval timer outside of On-duration periods" represents an interval for executing discontinuous reception if discontinuous reception is set to be executed during an Inactivity period. The interval for executing discontinuous reception may be represented by time, or may be represented by frames. The control unit 106 refers to the timer 110 and executes discontinuous reception control during an Inactivity period based on the "discontinuous reception interval timer outside of On-duration periods". In the example illustrated in FIG. 5, the interval is set so that discontinuous reception can be executed three times during an Inactivity period. In the following, a period during which discontinuous reception can be executed will be referred to as a "receivable period". Namely, an Inactivity period includes periods set with the "discontinuous reception interval timer outside of On-duration periods", and receivable periods. The number of receivable periods in an Inactivity period may be one or two, or may be more than three. A "CCE index" is an index for specifying a control channel to be used for decoding an uplink sync request.

Also, if the base station 200 is in a state out of sync with the user terminal 100 and data is generated for the user terminal 100 during an Inactivity period, the base station 200 transmits an uplink sync request during a receivable period within the Inactivity period.

The control unit 106 executes a procedure for establishing synchronization with the base station 200 based on the uplink sync request from the baseband section 104. Namely, the control unit 106 executes the procedure for establishing synchronization with the base station 200 based on the uplink sync request included in a PDCCH from the baseband section 104 during the Inactivity period.

The user terminal 100 includes the DRX control parameter setting unit 108. The DRX control parameter setting unit 108 is connected with the control unit 106. The DRX control parameter setting unit 108 may be configured with a memory. The DRX control parameter setting unit 108 is set with parameters for controlling a DRX state of the user terminal 100. Specifically, the DRX control parameter setting unit 108 is set with parameters included in a DRX command from the base station 200. A DRX command includes an "onDurationTimer", a "DRX cycle", a "drxStartOffset", a "PDCCH reception mode outside of On-duration periods", a "discontinuous reception interval timer outside of On-duration periods", and "CCE index". A DRX command may be indicated with a MAC Control element by the base station 200.

The user terminal 100 includes the timer 110. The timer 110 is connected with the control unit 106. The timer 110 is a timer used when discontinuous reception control is executed by the control unit 106.

### < Base station >

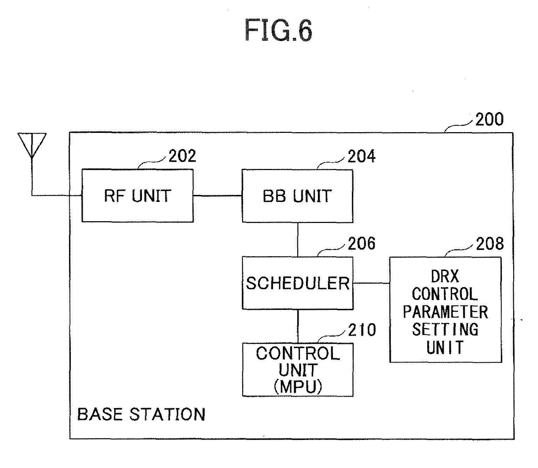

FIG. 6 is a schematic view illustrating a base station according to an embodiment.

The base station 200 includes an RF unit 202. The RF unit 202 converts a signal received by an antenna into a baseband signal to input it into a baseband (BB) unit 204. Signals received by the antenna include a random access channel from the user terminal 100 and the like. The random access channel may include a preamble. Also, the RF unit 202 upconverts an IF signal with an intermediate frequency input by the baseband unit 204 into an RF signal to amplify and transmit the signal. Specifically, a DRX command may be transmitted as a MAC Control element.

The base station 200 includes the baseband unit 204. The baseband unit 204 is connected with the RF unit 202. The baseband unit 204 inputs a digital signal input by the RF unit 202 into a scheduler 206. The digital signal includes a preamble and the like. Also, the baseband unit 204 transmits an uplink sync request using a first OFDM symbol for a PDCCH to be transmitted during an receivable period within an Inactivity period under control of the scheduler 206.

### <PDCCH>

A PDCCH to be transmitted during an receivable period within an Inactivity period by the base station 200 is the same as the one described with reference to FIG. 4.

The baseband unit 204 executes a mapping so that the number of symbols is one for a PDCCH to be transmitted during an Inactivity period. Namely, a CFI that should be indicated by a PCFICH is one.

The baseband unit 204 forms a resource block with multiple subcarriers in the frequency direction. There are cases where one RB is formed with 12 subcarriers. Also, the baseband unit 204 maps a reference signal for predetermined subcarriers in the frequency direction. In a first OFDM symbol, there are cases where reference signals are mapped for every three subcarriers.

Also, the baseband unit 204 forms a resource element group (REG) with four adjacent subcarriers as a unit. REGs are specified with four adjacent subcarriers among resource elements except for the resource element onto which the reference signal is mapped. The baseband unit 204 allocates a PDCCH by units of CCEs.

Also, the baseband unit 204 maps an uplink sync request onto a CCE specified by a CCE index among CCEs in the first symbol (OFDM Symbol 0) of a PDCCH to be transmitted during a receivable period within an Inactivity period.

The baseband unit 204 inputs a preamble from the user terminal 100 into the scheduler 206. Also, the baseband unit 204 inputs a DRX command from the scheduler 206 into the RF unit 202. The RF unit 202 converts the DRX command from the baseband unit 204 into a wireless signal to transmit the signal.

The base station 200 includes the scheduler 206. The scheduler 206 is connected with the baseband unit 204. The scheduler 206 executes discontinuous reception control based on parameters to be set to the DRX control parameter setting unit 208. The scheduler 206 may be configured with a microprocessor (MPU). Also, the scheduler 206 may be configured with a central processing unit (CPU), or may be configured with a DSP (Digital Signal Processor). The scheduler 206 sets a DRX command into a DRX control parameter setting unit 208 to be input by the control unit 210. A DRX command includes an "onDurationTimer", a "DRX cycle", a "drxStartOffset", a "PDCCH reception mode outside of On-duration periods", a "discontinuous reception interval timer outside of On-duration periods", and a "CCE index". The scheduler 206 executes discontinuous reception control based on parameters set into the DRX control parameter setting unit 208. When executing discontinuous reception control, if the "PDCCH reception mode outside of On-duration periods" is set on, control for discontinuous reception is also executed during an Inactivity period. Namely, control is executed for transmitting a downlink signal during a receivable period within an Inactivity period if necessary.

### < DRX control >

An example of discontinuous reception control by the scheduler 206 can be illustrated with FIG. 5.

As described above, a "DRX Cycle" indicates cyclic repetition of an Inactivity period following an On Duration period. With a "DRX Cycle", a cycle for DRX is set. An "onDurationTimer" indicates the number of continuous subframes of a PDCCH when a DRX Cycle is started. Namely, an "OnDurationTimer" represents periods during which PDCCH can be received within a DRX cycle. A "drxStartOffset" indicates a subframe with which a DRX Cycle is started. The "drxStartOffset" may be set by units of 1 ms. The scheduler 206 may refer to the timer 110 and control the "drxStartOffset".

Moreover, a "PDCCH reception mode outside of On-duration periods" indicates information for setting whether to have the user terminal 100 execute discontinuous reception during an Inactivity period. For example, it may be represented with on or off. A flag may be provided to indicate whether to have the user terminal 100 execute discontinuous reception during an Inactivity period. A "discontinuous reception interval timer outside of On-duration periods" represents an interval for having the user terminal 100 execute discontinuous reception if discontinuous reception is set to be executed during an Inactivity period by the user terminal 100. The interval for having the user terminal 100 executes discontinuous reception may be represented by time, or may be represented by frames. The scheduler 206 refers to a timer (not illustrated) and executes discontinuous reception control during an Inactivity period based on the "discontinuous reception interval timer outside of On-duration periods". If data to be transmitted to the user terminal 100 is generated and the base station 200 is out of sync with the user terminal 100, the scheduler 206 transmits a PDCCH. The PDCCH is mapped so that the number of symbols for the PDCCH becomes one.

In the example illustrated in FIG. 5, the interval is set so that discontinuous reception can be executed three times during an Inactivity period. It may be one or two, or may be more than three. A "CCE index" is an index for specifying a control channel to be used for decoding an uplink sync request.

Also, the scheduler 206 inputs a random access channel from the baseband unit 204 into the control unit 210.

Also, the scheduler 206 inputs a DRX command from the control unit 210 into the baseband unit 204.

The base station 200 includes the DRX control parameter setting unit 208. The DRX control parameter setting unit 208 is connected with the scheduler 206. The DRX control parameter setting unit 208 may be configured with a memory. The DRX control parameter setting unit 208 is set with parameters for controlling a DRX state of the user terminal 100. Specifically, the DRX control parameter setting unit 208 is set with parameters included in a DRX command to be sent to the user terminal 100. A DRX command includes an "onDurationTimer", a "DRX cycle", a "drxStartOffset", a "PDCCH reception mode outside of On-duration periods", a "discontinuous reception interval timer outside of On-duration periods", and "CCE index".

The base station 200 includes the control unit 210. The control unit 210 is connected with the scheduler 206. The control unit 210 executes a procedure for establishing synchronization with the user terminal 100 based on the preamble to be input from the scheduler 206. For example, the control unit 210 may execute the procedure for establishing synchronization with the user terminal 100, if a preamble is received during a receivable period within an Inactivity period. Namely, if a random access channel is received from the user terminal 100 for an uplink synch request transmitted by the base station 200 during a receivable period within an Inactivity period, a random access sequence may be started based on a preamble to be included in the random access channel.

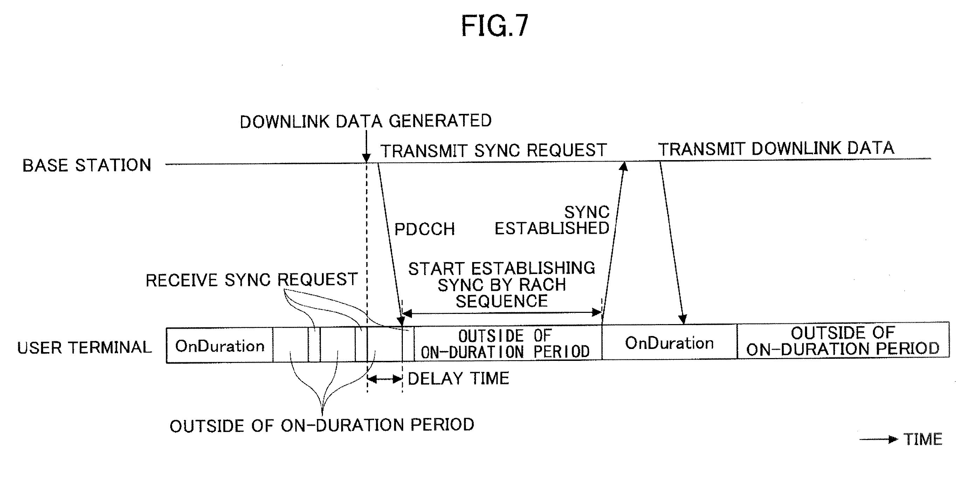

FIG. 7 illustrates discontinuous reception control according to an embodiment. The user terminal 100 has the "PDCCH reception mode outside of On-duration periods" set on.

The user terminal 100 executes discontinuous reception during an Inactivity period because the "PDCCH reception mode outside of On-duration periods" is set on.

Data is generated for the user terminal 100 at the base station 200. Namely, the data is generated that is bound for the user terminal 100 during a period with which the "discontinuous reception interval timer outside of On-duration periods" is activated. The base station 200 determines whether synchronization is established with the user terminal 100. If it is determined out of synch, an uplink sync request is transmitted after the expiration of the "discontinuous reception interval timer outside of On-duration periods".

Receiving the uplink sync request, the user terminal 100 transmits a random access channel to the base station 200.

The procedure for establishing synchronization between the base station 200 and the user terminal 100 is executed following the random access channel sequence. If the procedure for establishing synchronization between the base station 200 and the user terminal 100 ends, the data is transmitted from the base station 200 to the user terminal 100. If the procedure for establishing synchronization ends during an Inactivity period, the downlink data may be transmitted during an On-duration period. If the procedure for establishing synchronization ends during an On-duration period, the downlink data may be transmitted during the On-duration period.

Also, the control unit 210 determines user terminals to be put into a discontinuous reception state among user terminals that stay around the base station 200 based on a predetermined condition. Moreover, the control unit 210 determines parameters to be set on the user terminals to be put into the discontinuous reception state.

Also, the control unit 210 further determines user terminals whose "PDCCH reception mode outside of On-duration periods" need to be set among the user terminals to be put into the discontinuous reception state, and parameters to be set to the "PDCCH reception mode outside of On-duration periods" for the determined user terminals.

The control unit 210 inputs information about the identifiers of the user terminals to be put into the discontinuous reception state and the parameters to be set to the user terminals to the scheduler 206 as DRX commands. Also, the control unit 210 inputs information about the identifiers of the user terminals whose "PDCCH reception mode outside of On-duration periods" need to be set and the parameters to be set to the user terminals into the scheduler 206 as DRX commands.

### < Operation of user terminal >

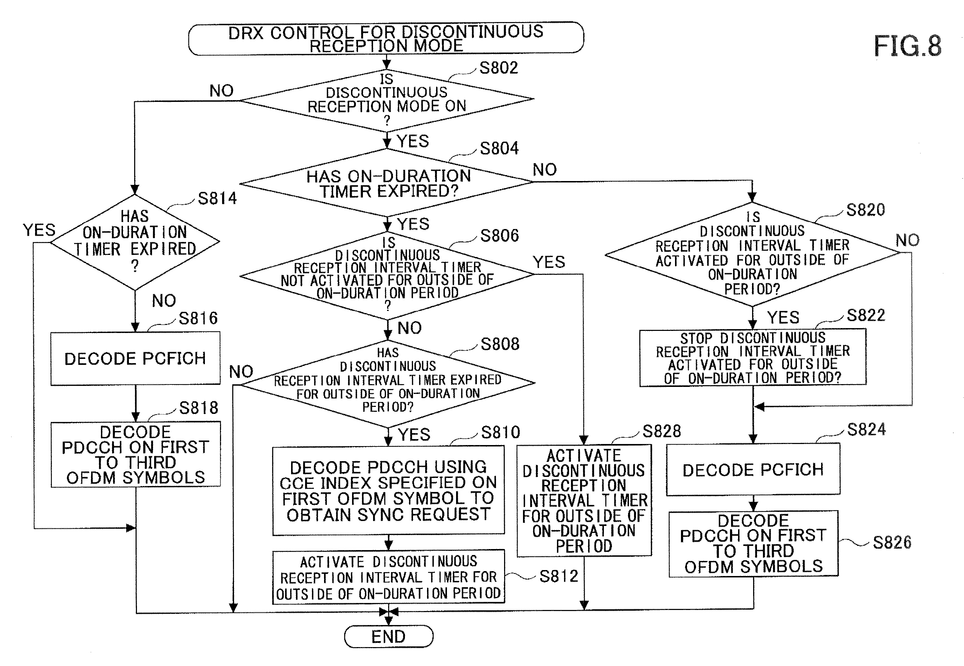

FIG. 8 is a flowchart illustrating operation of a user terminal 100 according to an embodiment. FIG. 8 mainly illustrates a procedure for the user terminal 100 to receive a PDCCH from the base station 200. The procedure illustrated in FIG. 8 is mainly executed by the control unit 106 of the user terminal 100 and the like.

The user terminal 100 determines whether the discontinuous reception mode is set on (Step S802). Here, the determination of the discontinuous reception mode at Step S802 is to determine whether the "PDCCH reception mode outside of On-duration periods" is set on or off.

If the discontinuous reception mode is set on (Step S802: YES), the user terminal 100 determines whether the "onDurationTimer" has expired (Step S804).

If the "onDurationTimer" is determined to have expired (Step S804: YES), the user terminal 100 determines whether the "discontinuous reception interval timer outside of On-duration periods" is inactivated (Step S806).

If the "discontinuous reception interval timer outside of On-duration periods" is not inactivated (Step S806: NO), the user terminal 100 determines whether the "discontinuous reception interval timer outside of On-duration periods" has expired (Step S808).

If the "discontinuous reception interval timer outside of On-duration periods" is determined to have expired (Step S808: YES), the user terminal 100 obtains an uplink sync request by decoding PDCCH using a CCE index specified on a first OFDM symbol (Step S810). If the uplink sync request is obtained at Step S810, the user terminal 100 may transmit a preamble with a random access channel.

The user terminal 100 activates the "discontinuous reception interval timer outside of On-duration periods" (Step S812). If the uplink sync request is not obtained at Step S810, the user terminal 100 may activate the "discontinuous reception interval timer outside of On-duration periods". After completing with Step S812, the procedure may transition to Step S802.

If it is determined that the discontinuous reception mode is set off at Step S802 (Step S802: NO), the user terminal 100 determines whether the "onDurationTimer" has expired (Step S814). Namely, this corresponds to a case where the "PDCCH reception mode outside of On-duration periods" is set off.

If it is determined that the "onDurationTimer" has expired (Step S814: YES), the procedure ends. This is because it is an Inactivity period.

If it is determined that the "onDurationTimer" has not expired (Step S814: NO), the user terminal 100 decodes a PCFICH (Step S816). The user terminal 100 decodes the PDCCH on the first OFDM symbol to the third OFDM symbol specified by a PCFICH (Step S818), and the procedure ends.

If the "onDurationTimer" is not determined to have expired at Step S804 (Step S804: NO), the user terminal 100 determines whether the "discontinuous reception interval timer outside of On-duration periods" is activated (Step S820).

If the "discontinuous reception interval timer outside of On-duration periods" is activated (Step S820: YES), the user terminal 100 stops the "discontinuous reception interval timer outside of On-duration periods" (Step S822). This is because it is an On-duration period.

After stopping the "discontinuous reception interval timer outside of On-duration periods" at Step S822, or if the "discontinuous reception interval timer outside of On-duration periods" is not determined activated at Step S820 (Step S820: NO), the user terminal 100 decodes a PCFICH (Step S824). The user terminal 100 decodes the PDCCH on the first OFDM symbol to the third OFDM symbol that should be specified by a PCFICH (Step S826), and the procedure ends.

If the "discontinuous reception interval timer outside of On-duration periods" is inactivated at Step S806 (Step S806: YES), the user terminal 100 activates the "discontinuous reception interval timer outside of On-duration periods" (Step 828), and the procedure ends. This is because it is an Inactivity period.

If the "discontinuous reception interval timer outside of On-duration periods" is not determined to have expired (Step S808: NO), the procedure ends. This is because it is not a receivable period within an Inactivity period.

Steps S802-S826 are executed by a program with a microprocessor installed in the user terminal 100. The program that has the microprocessor function as the user terminal 100 may be downloaded, for example, via a communication network. Also, it may be provided in a state recorded in a recording medium. If the program is provide by the recording medium, the program recorded in the recording medium is read when the recording medium is inserted into an auxiliary storage device of the user terminal 100. The microprocessor writes the read program into a RAM or an HDD, and executes the procedure. The program has the computer (microprocessor) of the user terminal 100 execute Steps S802-S826 in FIG. 8. Also, for example, the program may have the computer execute at least a part of Steps.

### < Operation of base station >

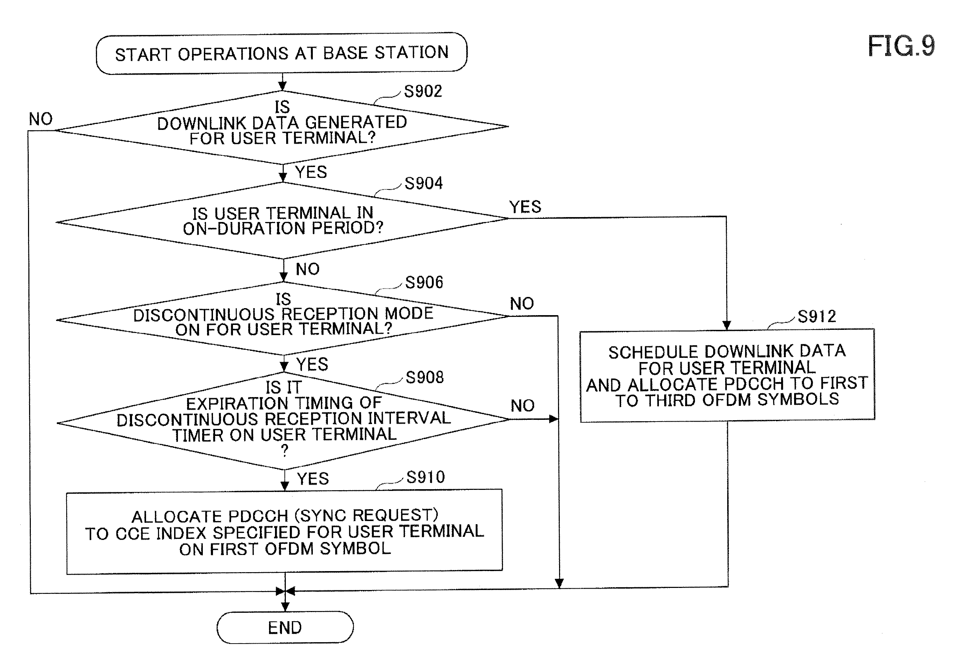

FIG. 9 is a flowchart illustrating operation of a base station according to an embodiment. FIG. 9 mainly illustrates a procedure for establishing synchronization between a user terminal 100 and a base station 200 if data is generated for the user terminal 100 in the base station 200 and it is out of sync with the user terminal 100. The procedure illustrated in FIG. 9 is mainly executed by the control unit 210 of the base station 200 and the like.

The base station 200 determines whether downlink data is generated for the user terminal 200 (Step S902).

If it is determined that downlink data is generated for the user terminal 200 (Step S902: YES), the base station 200 determines whether it is an On-duration period at the user terminal 200 (Step S904).

If it is determined that it is not an On-duration period at the user terminal 200 (Step S904: NO), the base station 200 determines whether the user terminal 100 has the discontinuous reception mode set on (Step S906). Here, the determination of the discontinuous reception mode at Step S904 is to determine whether the "PDCCH reception mode outside of On-duration periods" is set on or off.

If it is determined that the user terminal 100 has the discontinuous reception mode set on (Step S906: YES), the base station 200 determines whether it is an expiration timing of the "discontinuous reception interval timer outside of On-duration periods" at the user terminal 100 (Step S908).

If it is determined that it is an expiration timing of the "discontinuous reception interval timer outside of On-duration periods" at the user terminal 100 (Step S908: YES), the base station 200 allocates a PDCCH to a CCE index in the first OFDM symbol (OFDM symbol 0) to be specified for the user terminal 100 (Step S910). The PDCCH includes an uplink sync request.

The downlink signal allocated for the uplink sync request at Step S910 is transmitted to the user terminal 100.

The user terminal 100 transmits a preamble with a random access channel based on the uplink sync request included in the downlink signal from the base station 200. By transmitting the preamble from the user terminal 100, the procedure for establishing synchronization starts between the user terminal 100 and the base station 200.

If it is determined that downlink data is not generated for the user terminal 200 at Step S902 (Step S902: NO), the procedure ends. The user terminal 100 continues discontinuous reception control under control of the base station 200.

If it is determined that it is an On-duration period at the user terminal 200 at Step S904 (Step S904: YES), the base station 200 executes scheduling for the downlink data for the user terminal 100. The base station 200 allocates a PDCCH to the first to third OFDM symbols (Step S912).

The base station 200 transmits the downlink signal. The user terminal 100 can receive the downlink signal as it is an On-duration period.

If it is not determined that the user terminal 100 has the discontinuous reception mode set on at Step S906 (Step S906: NO), or if it is not determined that it is expiration timing of the "discontinuous reception interval timer outside of On-duration periods" at the user terminal 100 at Step S908 (Step S908: NO), the procedure ends.

Steps S902-S912 are executed by a program with a microprocessor installed in the base station 200. The program that has the microprocessor function as the base station 200 may be downloaded, for example, via a communication network. Also, it may be provided in a state recorded in a recording medium. If the program is provide by the recording medium, the program recorded in the recording medium is read when the recording medium is inserted into an auxiliary storage device of the base station 200. The microprocessor writes the read program into a RAM or an HDD, and executes the procedure. The program has the computer (microprocessor) of the base station 200 execute Steps S902-S912 in FIG. 9. Also, for example, the program may have the computer execute at least a part of Steps.

In the above embodiments, the PDCCH may be allocated to the first to third OFDM symbols (OFDM symbol 0 to OFDM symbol 2).

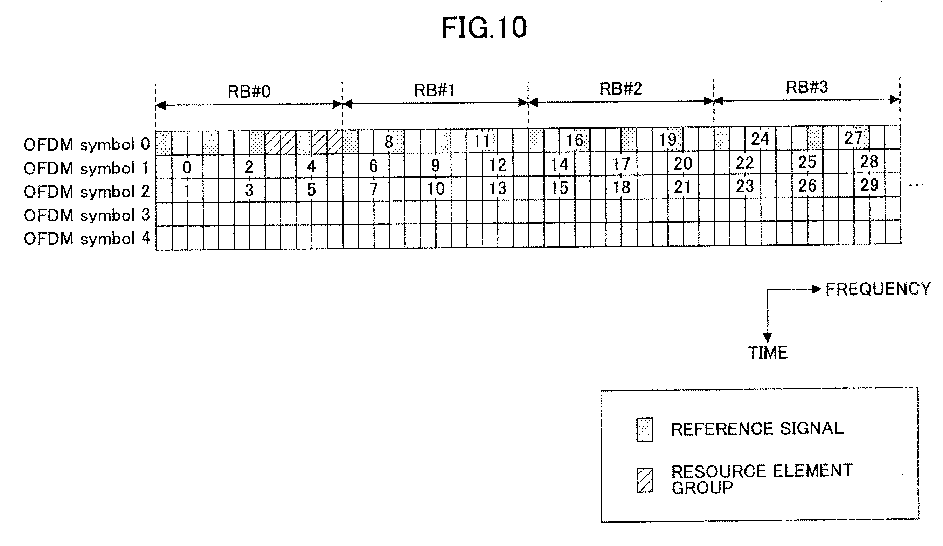

FIG. 10 is a schematic view illustrating a PDCCH according to an embodiment that is to be transmitted during a receivable period within an Inactivity period. In the example illustrated in FIG. 10, the PDCCH is allocated to the first to third OFDM symbols (OFDM symbol 0 to OFDM symbol 2). PDCCH may be allocated to the first to second OFDM symbols. For both cases where PDCCH is allocated to the first to third OFDM symbols or PDCCH is allocated to the first to second OFDM symbols, it is preferable that the PDCCH to be used for obtaining an uplink sync request is specified on the first OFDM symbol. This is because the user terminal 100 can obtain the uplink sync request without decoding a PCFICH.

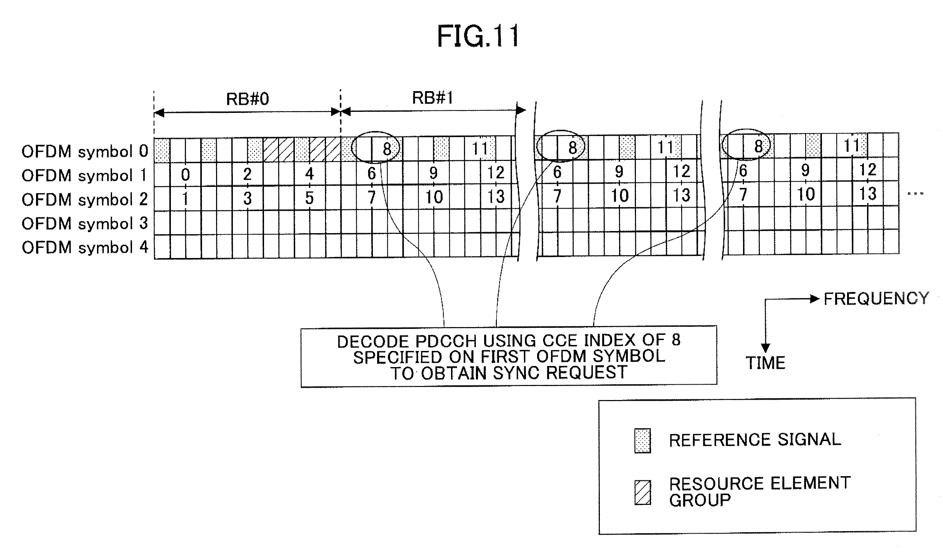

FIG. 11 illustrates a method of specifying a PDCCH according to an embodiment. A PDCCH is specified with a CCE index. In the example illustrated in FIG. 11, a REG is specified with the CCE index of "8" in the first OFDM symbol.

According to the embodiments, a user terminal under discontinuous reception control can receive a downlink signal during a period outside of a On-duration period. Namely, a base station can have a user terminal receive a downlink signal during a period outside of an On-duration period. As it is possible to have a downlink signal be received during a period outside of a On-duration period, a base station can transmit an uplink sync request for establishing synchronization with a user terminal even if data is generated for the user terminal during a period outside of a On-duration period and it is out of sync with the user terminal.

## Claims

1. A wireless communication system comprising:
a user terminal (100) capable of having a discontinuous reception function set; and
a base station (200) executing wireless communication with the user terminal,
wherein the user terminal includes
a receiving section configured to receive discontinuous reception information about discontinuous reception from the base station,
a discontinuous reception cycle setting section configured to set discontinuous reception cycles for executing the discontinuous reception based on the discontinuous reception information received by the receiving section,
a first period setting section configured to set a first period during which a downlink signal can be received among the discontinuous reception cycles set by the discontinuous reception cycle setting section based on the discontinuous reception information received by the receiving section, and
a receivable period setting section configured to set a receivable period during which the downlink signal can be received, the receivable period being within a second period outside of the first period set by the first period setting section, the second period being among the discontinuous reception cycles to be set by the discontinuous reception cycle setting section based on the discontinuous reception information received by the receiving section,
wherein the receiving section receives the downlink signal during the receivable period set by the receivable period setting section,
wherein the base station includes
a discontinuous reception cycle setting section configured to set the discontinuous reception cycles to be set on the user terminal,
a first period setting section configured to set the first period during which the downlink signal is received by the user terminal among the discontinuous reception cycles set by the discontinuous reception cycle setting section,
a receivable period setting section configured to set the receivable period during which the downlink signal can be received by the user terminal, the receivable period being within the second period outside of the first period set by the first period setting section, the second period being among the discontinuous reception cycles to be set by the discontinuous reception cycle setting section, and
a transmission section configured to transmit the discontinuous reception information about the discontinuous reception including the discontinuous reception cycles to be set by the discontinuous reception cycle setting section, the first period to be set by the first period setting section, and the receivable period to be set by the receivable period setting section.

2. A user terminal (100) capable of having a discontinuous reception function set, comprising:
a receiving section configured to receive discontinuous reception information about discontinuous reception from the base station,
a discontinuous reception cycle setting section configured to set discontinuous reception cycles for executing the discontinuous reception based on the discontinuous reception information received by the receiving section,
a first period setting section configured to set a first period during which a downlink signal can be received among the discontinuous reception cycles set by the discontinuous reception cycle setting section based on the discontinuous reception information received by the receiving section, and
a receivable period setting section configured to set a receivable period during which the downlink signal can be received, the receivable period being within a second period outside of the first period set by the first period setting section, the second period being among the discontinuous reception cycles to be set by the discontinuous reception cycle setting section based on the discontinuous reception information received by the receiving section,
wherein the receiving section receives the downlink signal during the receivable period set by the receivable period setting section.

3. The user terminal as claimed in claim 2, wherein the discontinuous reception information from the base station includes information about a period outside of the receivable period,
wherein the receivable period setting section sets the receivable period based on the information about the period outside of the receivable period received by the receiving section.

4. The user terminal as claimed in claim 2, wherein the receiving section receives an uplink sync request included in the downlink signal during the receivable period.

5. The user terminal as claimed in claim 4, wherein the discontinuous reception information includes information about mapping of control information,
wherein the receiving section receives the uplink sync request based on the information about the mapping.

6. The user terminal as claimed in claim 5, wherein the downlink signal includes a control channel, and the information for receiving the uplink sync request is mapped onto a first OFDM symbol.

7. A base station (200) comprising:
a discontinuous reception cycle setting section configured to set discontinuous reception cycles to be set on a user terminal for having the user terminal execute discontinuous reception;
a first period setting section configured to set a first period during which a downlink signal is received by the user terminal among the discontinuous reception cycles set by the discontinuous reception cycle setting section;
a receivable period setting section configured to set a receivable period during which the downlink signal can be received by the user terminal, the receivable period being within a second period outside of the first period set by the first period setting section, the second period being among the discontinuous reception cycles to be set by the discontinuous reception cycle setting section; and
a transmission section configured to transmit discontinuous reception information about the discontinuous reception including the discontinuous reception cycles to be set by the discontinuous reception cycle setting section, the first period to be set by the first period setting section, and the receivable period to be set by the receivable period setting section.

8. The base station as claimed in claim 7, wherein the transmission section transmits the downlink signal including an uplink sync request during the receivable period.

9. The base station as claimed in claim 7, wherein the discontinuous reception information to be transmitted by the transmission section includes information about mapping of control information.

10. The base station as claimed in claim 9, further comprising:
a mapping section configured to map information for receiving the uplink sync request on a first OFDM symbol,
wherein the downlink signal to be transmitted by the transmission section includes a control channel.

11. A method of setting discontinuous reception in a wireless communication system including
a user terminal (100) capable of having a discontinuous reception function set, and
a base station (200) executing wireless communication with the user terminal,
the method comprising:
having the user terminal execute
receiving discontinuous reception information about discontinuous reception from the base station,
setting discontinuous reception cycles for executing the discontinuous reception based on the discontinuous reception information received by the receiving,
setting a first period during which a downlink signal can be received among the discontinuous reception cycles set by the setting of discontinuous reception cycle based on the discontinuous reception information received by the receiving, and
setting the receivable period during which the downlink signal can be received by the user terminal, the receivable period being within a second period outside of the first period set by the setting of the first period, the second period being among the discontinuous reception cycles to be set by the setting of the discontinuous reception cycles based on the discontinuous reception information received by the receiving,
wherein the receiving receives the downlink signal during the receivable period to be set by the setting of the receivable period,
having the base station execute
setting the discontinuous reception cycles to be set on the user terminal,
setting the first period during which the downlink signal is received by the user terminal among the discontinuous reception cycles set by the setting of the discontinuous reception cycles,
setting a receivable period during which the downlink signal can be received by the user terminal, the receivable period being within a second period outside of the first period set by the setting of the first period, the second period being among the discontinuous reception cycles to be set by the setting of the discontinuous reception cycles,
transmitting the discontinuous reception information about the discontinuous reception including the discontinuous reception cycles to be set by the setting of the discontinuous reception cycles, the first period to be set by the setting of the first period, and the receivable period to be set by the setting of the receivable period.
